# EUROPÄISCHE PATENTSCHRIFT

(11) **EP 2 265 050 B1**
(45) Veröffentlichungstag und Bekanntmachung des Hinweises auf die Patenterteilung: **07.12.2016**
(21) Anmeldenummer: 10182885.3
(22) Anmeldetag: 16.10.1999
(51) Int. Cl.: H04W 4/20, H04W 4/14, H04W 4/18, H04W 4/12

(54) **Verfahren zum die Übertragen von Kurznachrichten**
Method for the transmission of short messages
Procédé pour la transmission de messages courts

(30) Priorität: 08.12.1998 DE 19856440
(43) Veröffentlichungstag der Anmeldung: 22.12.2010
(62) Teilanmeldung aus: 04021690.5
(73) Patentinhaber: IPCom GmbH & Co. KG, 82049 Pullach (DE)
(72) Erfinder: Hans, Martin, 31162 Bad Salzdetfurth (DE); Kowalewski, Frank, 37085 Göttingen (DE); Schulz, Holger, 10587 Berlin (DE); Fischer, Ralf, 31199 Diekholzen (DE); Schmidt, Gunnar, 78052 Villingen-Schwenningen (DE)
(74) Vertreter: 2s | ip Schramm Schneider Patentanwälte Rechtsanwälte

(56) Entgegenhaltungen:
- EP-A1- 0 739 147
- SEH-JOON DOKKO ET AL: "Development of multimedia E-mail system providing an integrated message view", HIGH PERFORMANCE COMPUTING ON THE INFORMATION SUPERHIGHWAY, 1997. HPC ASIA '97 SEOUL, SOUTH KOREA 28 APRIL-2 MAY 1997, LOS ALAMITOS, CA, USA,IEEE COMPUT. SOC, US, 28. April 1997 (1997-04-28), Seiten 494-498, XP010224953, DOI: DOI:10.1109/HPC.1997.592197 ISBN: 978-0-8186-7901-8
- BOSCH: "Generalised Structure for a Multimedia Messaging Service", ETSI STC SMG1+SMG4+SMG12 MULTIMEDIATDOC, XX, XX, Nr. 43/98, 3. Dezember 1998 (1998-12-03), XP002431202,

## Beschreibung

### Stand der Technik

Kurznachrichtendienste zur Übertragung von Kurznachrichten sind bereits bekannt. Die Kurznachrichtendienste dienen dazu, einem Teilnehmer eines Telekommunikationsnetzes eine Kurznachricht zu senden, ohne daß vorher eine Telekommunikationsverbindung zu diesem aufgebaut werden muss. Dies ist besonders in Mobilfunksystemen von Interesse, da dort Teilnehmer oftmals nicht erreichbar sind. Dabei werden eingehende Kurznachrichten von einem Netzbetreiber des Telekommunikationsnetzes gespeichert und zu einem späteren Zeitpunkt an den adressierten Teilnehmer übermittelt. Der Teilnehmer wird von dem Eintreffen einer für ihn bestimmten Kurznachricht informiert, so daß er diese vom Netzbetreiber herunterladen kann.

Beispiel für einen Kurznachrichtendienst ist der Short-Message-Service (SMS) nach dem GSM-Standard (Global System for Mobile Communications). Dieser Kurznachrichtendienst gibt einen Übertragungsrahmen für die Übertragung einer Kurznachricht mit bis zu 160 7-Bit ASCII-Textzeichen (American Standard Code for Information Interchange) vor. Eine Übertragung von längeren Texten ist mit Hilfe von verketteten Kurznachrichten möglich. Mit Hilfe dieses Kurznachrichtendienstes ist auch mit einfachen Mobilfunkendgeräten ein Erstellen und Lesen der Kurznachrichten möglich. Da gemäß dem GSM-Standard nur eine Textübertragung für die Kurznachrichten vorgesehen ist, müssten bei der Übertragung von binären Daten, wie Audiodaten, Bilddaten, oder dergleichen, diese in das Textformat umgewandelt und nach dem Empfang wieder in das Binärformat zurückgewandelt werden.

Aus Seh-Joon Dokko et al. "Development of Multimedia E-Mail System Providing an Integrated Message View", Hihgh Performance Computing on the Information Superhighway (HPC-Asia '97), IEEE Computer Society, Seiten 494 bis 498, ist ein Verfahren zum Übertragen einer Kurznachricht von einem Sender zu einem Empfänger durch ein Netzwerk mit SMTP bekannt. Die Nachricht wird in einem Übertragungsrahmen übertragen, wobei eine E-Mail-Adresse die Adresse des Empfängers ist.

Aus der EP 0 739 147 A1 ist ein Verfahren zum Übertragen einer Kurznachricht bekannt, die im Netzwerk gespeichert wird. Wenn ein Endgerät eingeschaltet wird, sendet dieses eine inquiry-Nachricht an den Netzbetreiber, der dann eine Aktivierung des Endgerätes feststellt. Das Endgerät empfängt dann eine Nachricht als Antwort. Anschließend fordert das Endgerät die Übertragung der Kurznachricht an. In einem weiteren Schritt lädt das Endgerät die Kurznachricht vollständig herunter.

Aus Bosch, "Generalised Structure for a Multimedia Message Service", ETSI STC SMG1+SMG12 MULTIMEDIATdoc 043/98, ist ein Übertragungsrahmen einer Nachricht mit verschiedenen Datenformaten bekannt. Eine Mitteilung über den Aufbau oder Inhalt der Nachricht wird an das Endgerät gesendet.

Aufgabe der vorliegenden Erfindung ist es, die Übertragung von Kurznachrichten zu optimieren.

Diese Aufgabe wird durch das Verfahren gemäß Anspruch 1 gelöst. Vorteilhafte Weiterbildungen sind in den abhängigen Ansprüchen definiert.

Der Übertragungsrahmen in einer vorteilhaften Weiterbildung des erfindungsgemäßen Verfahrens hat demgegenüber den Vorteil, daß mindestens zwei Datenfelder vorgesehen sind, daß in den Datenfeldern Daten einer Kurznachricht abgelegt sind und daß in einem ersten Datenfeld Daten eines ersten Datenformats und in einem zweiten Datenfeld Daten eines vom ersten Datenformat verschiedenen zweiten Datenformats abgelegt sind. Auf diese Weise lässt sich eine Kurznachricht, die unterschiedliche Datenarten umfasst, in einem einzigen Übertragungsrahmen übertragen. Somit lassen sich unterschiedliche Medien, wie beispielsweise Textdaten, Audiodaten und Bilddaten auf einfache Weise in eine einzige Kurznachricht integrieren, so dass eine Multimedia-Kurznachricht gebildet werden kann.

Ein weiterer Vorteil besteht darin, daß der Übertragungsrahmen nicht in seiner Länge begrenzt ist, sondern dass beliebige Datenfelder aneinandergereiht im Übertragungsrahmen übertragen werden können.

Ein weiterer Vorteil besteht darin, daß durch die Aneinanderreihung der Datenfelder ein einfaches Trennen bzw. Herunterladen der Daten eines einzelnen Datenfeldes oder Mediums mit Text-, Audio- oder Bilddaten ermöglicht wird. Da damit nur der wirklich benötigte Teil der Kurznachricht vom Netzbetreiber des Telekommunikationsnetzes heruntergeladen werden muß, läßt sich Übertragungskapazität einsparen. Besonders vorteilhaft ist es, daß in dem ersten Datenfeld eine erste Kennung vorgesehen ist, die den Aufbau und/oder den Inhalt der Kurznachricht kennzeichnet. Auf diese Weise kann ein Teilnehmer, an den die Kurznachricht adressiert ist, besonders einfach durch Übertragung lediglich des ersten Datenfeldes vom Netzbetreiber des Telekommunikationsnetzes zum adressierten Teilnehmer über den Aufbau und/oder den Inhalt der Kurznachricht informiert werden. Aufgrund dieser Information kann beim adressierten Teilnehmer dann entschieden werden, welche Teile oder Datenfelder der Kurznachricht er vom Netzbetreiber des Telekommunikationsnetzes herunterladen möchte.

Ein weiterer Vorteil besteht darin, daß das erste Datenfeld in seiner Größe auf einen vorgegebenen Wert beschränkt ist. Somit kann auch ein Teilnehmer mit beschränkter Aufnahmekapazität für den Empfang von Kurznachrichten über den Aufbau und/oder den Inhalt der gesamten Kurznachricht durch Übertragung des ersten Datenfeldes informiert werden.

Ein weiterer Vorteil besteht darin, daß die Gesamtlänge der Kurznachricht nicht begrenzt ist.

Vorteilhaft ist es auch, daß in mindestens zwei Datenfeldern jeweils eine datenfeldspezifische Kennung vorgesehen ist, die den Aufbau und/oder den Inhalt des entsprechenden Datenfeldes kennzeichnet. Auf diese Weise kann auch eine Mitteilung über den Aufbau und/oder den Inhalt der gesamten Kurznachricht durch Zusammenfassen aller datenfeldspezifischen Kennungen erzeugt und an den adressierten Teilnehmer gesendet werden, so daß das erste Datenfeld vor allem im Falle einer Größenbeschränkung nicht übermäßig durch Kennungsdaten gefüllt wird.

Durch die datenfeldspezifische Kennung kann der adressierte Teilnehmer beim Herunterladen des zugehörigen Datenfeldes vom Netzbetreiber noch genauer über dieses Datenfeld informiert werden und somit beispielsweise eine Wiedergabe der mit dem Datenfeld übertragenen Daten besser an seine Wiedergabemöglichkeiten anpassen.

Besonders vorteilhaft ist es, daß die im ersten Datenfeld abgelegten Daten in einem von allen Teilnehmern des Telekommunikationsnetzes lesbaren Datenformat vorliegen. Auf diese Weise sind Kurznachrichten zumindest teilweise an alle Teilnehmer des Telekommunikationsnetzes versendbar. Außerdem können alle Teilnehmer über für sie beim Netzbetreiber vorliegende Kurznachrichten zumindest informiert werden, auch wenn sie bestimmte Datenfelder der für sie bestimmten Kurznachricht nicht lesen können.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild für die Übertragung von Kurznachrichten in einem Telekommunikationsnetz, Figur 2 einen allgemeinen Aufbau eines Übertragungsrahmens und Figur 3 ein konkretes Beispiel für einen Aufbau eines Übertragungsrahmens.

### Beschreibung des Ausführungsbeispiels

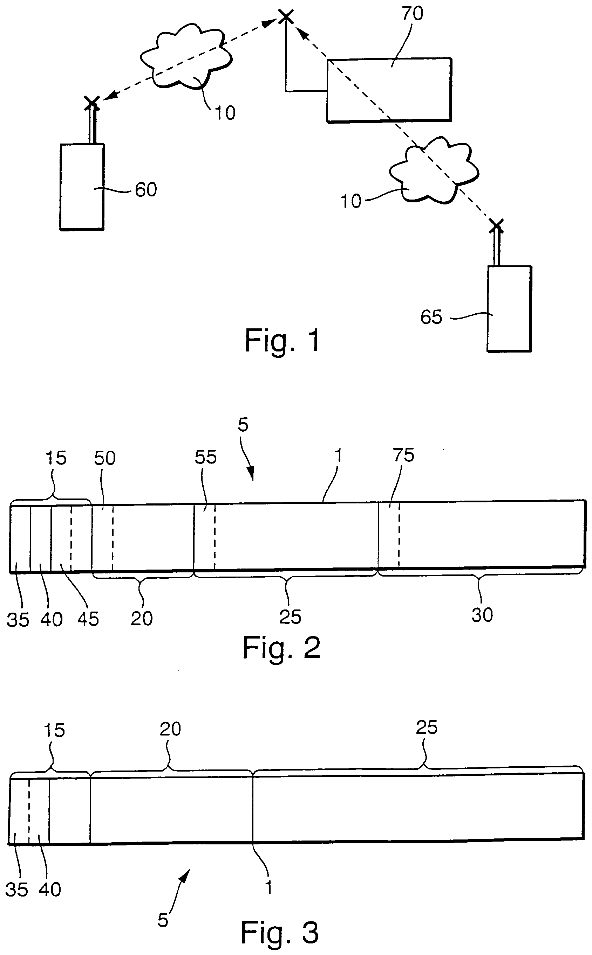

In Figur 1 kennzeichnet 60 einen ersten Teilnehmer und 65 einen zweiten Teilnehmer eines Telekommunikationsnetzes 10, das insbesondere als Funktelekommunikationsnetz, beispielsweise als Mobilfunknetz ausgebildet ist. Der erste Teilnehmer 60 und der zweite Teilnehmer 65 sind jeweils als Telekommunikationsgerät, insbesondere als Funkeinheit, beispielsweise als Mobilfunkgerät, als Betriebsfunkgerät, als Handfunkgerät, oder dergleichen ausgebildet. In Figur 1 ist außerdem ein Netzbetreiber 70 des Telekommunikationsnetzes 10 dargestellt, der ebenfalls als Telekommunikationsgerät, insbesondere als Funkeinheit ausgebildet sein kann.

Beim zweiten Teilnehmer 65 wird eine Kurznachricht 5 für den ersten Teilnehmer 60 erstellt und mit entsprechender Adressierung über das Telekommunikationsnetz 10 an den Netzbetreiber 70 abgestrahlt. Der Netzbetreiber 70 speichert die Kurznachricht 5 und sendet dem ersten Teilnehmer 60 eine Nachricht zu, wonach dieser über das Vorliegen einer an ihn adressierten Kurznachricht 5 informiert wird. Diese Nachricht kann dem ersten Teilnehmer 60 beispielsweise zugesandt werden, wenn der Netzbetreiber 70 eine Aktivierung des ersten Teilnehmers 60 feststellt. Fordert der erste Teilnehmer 60 nach Empfang der genannten Nachricht den Netzbetreiber 70 zur Übertragung der Kurznachricht 5 auf, so sendet der Netzbetreiber 70 an den ersten Teilnehmer 60 zunächst eine Mitteilung, die den ersten Teilnehmer 60 über Aufbau und/oder Inhalt der Kurznachricht 5 informiert. Der erste Teilnehmer 60 kann dann die Kurznachricht 5 teilweise oder vollständig vom Netzbetreiber 70 herunterladen, so daß die Kurznachricht 5 teilweise oder vollständig vom Netzbetreiber 70 zum ersten Teilnehmer 60 übertragen wird.

In Figur 2 ist der Aufbau einer solchen Kurznachricht 5 dargestellt. Die Kurznachricht 5 wird dabei in einem Übertragungsrahmen 1 vom zweiten Teilnehmer 65 zum Netzbetreiber 70 übertragen. Der Übertragungsrahmen 1 umfaßt ein erstes Datenfeld 15, ein zweites Datenfeld 20, gegebenenfalls ein drittes Datenfeld 25 und ein viertes Datenfeld 30. Das erste Datenfeld 15 umfaßt eine erste Kennung 35, die den Aufbau der Kurznachricht 5 kennzeichnet. Zusätzlich kann im ersten Datenfeld 15 eine zweite Kennung 40 vorgesehen sein, die den Inhalt der Kurznachricht 5 kennzeichnet. Die erste Kennung 35 und die zweite Kennung 40 können auch zu einer einzigen Kennung zusammengefaßt sein, die den Aufbau und/oder den Inhalt der Kurznachricht 5 kennzeichnet. Im ersten Datenfeld 15 sind außerdem Daten eines ersten Datenformats abgelegt. Im zweiten Datenfeld 20 sind Daten eines vom ersten Datenformat verschiedenen zweiten Datenformats abgelegt. In den gegebenenfalls vorhandenen weiteren Datenfelder 25, 30 sind ebenfalls Daten abgelegt, deren Datenformat vom Datenformat des ersten Datenfeldes 15 oder des zweiten Datenfeldes 20 verschieden sein kann, aber nicht muß. Sind mehr als zwei Datenfelder im Übertragungsrahmen 1 vorgesehen, so sind zumindest in zwei der Datenfelder Daten unterschiedlichen Formats abgelegt, wobei die Position dieser Datenfelder im Übertragungsrahmen 1 unerheblich ist.

Durch gestrichelte Linien in Figur 2 ist angedeutet, daß das erste Datenfeld 15 zusätzlich eine erste datenfeldspezifische Kennung 45 umfassen kann, die den Aufbau und/oder den Inhalt des ersten Datenfeldes 15 kennzeichnet. Entsprechend kann das zweite Datenfeld 20 eine zweite datenfeldspezifische Kennung 50 umfassen, die den Aufbau und/oder den Inhalt des zweiten Datenfeldes 20 kennzeichnet. Entsprechend kann das dritte Datenfeld 25 eine dritte datenfeldspezifische Kennung 55 umfassen, die den Aufbau und/oder den Inhalt des dritten Datenfeldes 25 kennzeichnet und das vierte Datenfeld 30 kann eine vierte datenfeldspezifische Kennung 75 umfassen, die den Aufbau und/oder den Inhalt des vierten Datenfeldes 30 kennzeichnet.

Die erste Kennung 35 kann Angaben über die Anzahl der Datenfelder 15, 20, 25, 30 in der Kurznachricht 5 umfassen. Zusätzlich oder alternativ kann die erste Kennung 35 Angaben über die Datenformate der in den Datenfeldern 15, 20, 25, 30 abgelegten Daten umfassen. Zusätzlich oder alternativ können auch Angaben über die Größe der Datenfelder 15, 20, 25, 30 in der ersten Kennung 35 enthalten sein. Die zweite Kennung 40 kann dann Angaben über die Datenart der in den Datenfeldern 15, 20, 25, 30 abgelegten Daten umfassen. So kann die zweite Kennung 40 beispielsweise Angaben darüber enthalten, ob in einem Datenfeld Audiodaten oder Bilddaten abgelegt sind.

Es kann nun vorgesehen sein, daß der Netzbetreiber 70 auf Anforderung des ersten Teilnehmers 60 das erste Datenfeld 15 mit der ersten Kennung 35 und der zweiten Kennung 40 an den ersten Teilnehmer 60 übermittelt, so daß der erste Teilnehmer 60 aufgrund der in der ersten Kennung 35 und der zweiten Kennung 40 übertragenen Informationen über den Aufbau und/oder den Inhalt der Kurznachricht 5 prüfen kann, welche Datenfelder der Kurznachricht 5 er aufgrund seiner Funktionalität vom Netzbetreiber 70 herunterladen und/oder wiedergeben kann. Außerdem kann beim ersten Teilnehmer 60 eine Entscheidung darüber getroffen werden, welche der lesbaren Datenfelder der Kurznachricht 5 überhaupt vom Netzbetreiber 70 heruntergeladen werden sollen, wenn nicht alle lesbaren Datenfelder der Kurznachricht 5 beim ersten Teilnehmer 60 von Interesse sind und Übertragungskapazität eingespart werden soll. Wenn nach der Aufforderung des ersten Teilnehmers 60 das gesamte erste Datenfeld 15 mit der ersten Kennung 35 und der zweiten Kennung 40 an den ersten Teilnehmer 60 übertragen werden soll, so sollte möglichst gewährleistet sein, daß die im ersten Datenfeld 15 abgelegten Daten in einem von allen Teilnehmern des Telekommunikationsnetzes 10 lesbaren Datenformat vorliegen. Dies ist insbesondere dann gegeben, wenn die im ersten Datenfeld 15 abgelegten Daten zusammen mit den Daten in der ersten Kennung 35 und in der zweiten Kennung 40 in einem Textformat vorliegen, wobei sich beispielsweise das SMS-Format (Short-Message-Service) gemäß dem GSM-Standard (Global System for Mobile Communications) anbietet, da es in einem nach den Anforderungen des GSM-Systems ausgebildeten Telekommunikationsnetz von den nach dem GSM-Standard ausgebildeten Teilnehmern bzw. Mobilfunkgeräten dieses Telekommunikationsnetzes lesbar ist. Dabei kann das erste Datenfeld 15 dem für den SMS-Kurznachrichtendienst nach dem GSM-Standard bisher schon vorgeschriebenen Datenfeld entsprechen und in seiner Größe auf die 160 7-Bit ASCII-Textzeichen (American Standard Code for Information Interchange) beschränkt sein. Die anderen Datenfelder 20, 25, 30 müssen in ihrer Größe nicht beschränkt sein.

Ein weiteres Datenformat für das erste Datenfeld 15, das alternativ zum Textformat ebenfalls von allen Teilnehmern des Telekommunikationsnetzes 10 lesbar ist, ist die Binärkodierung von Verweisen auf Einträge in solchen Tabellen, die bekannte Datenformate enthalten und die allen Teilnehmern des Telekommunikationsnetzes 10 bekannt sind.

Zumindest ein Teil der im ersten Datenfeld 15 abgelegten Daten, beispielsweise die Daten der ersten Kennung 35 und/oder die Daten der zweiten Kennung 40, bestehen dann aus binärkodierten Werten, die die Indizes der Tabelleneinträge darstellen. In den Tabellen sind bekannte Datenarten und/oder Datenformate, zum Beispiel Audio- und/oder Videoformate, diesen Indizes zugeordnet.

Auch die datenfeldspezifischen Kennungen 45, 50, 55, 75 können Angaben über die Datenformate im jeweils zugehörigen Datenfeld 15, 20, 25, 30 und/oder über die Größe des jeweils zugehörigen Datenfeldes 15, 20, 25, 30 und/oder über die Datenart in dem jeweiligen Datenfeld 15, 20, 25, 30 umfassen. Wenn vereinbart ist, daß im ersten Datenfeld 15 die Daten gemäß dem GSM-SMS-Textformat vorliegen und dieses Datenfeld beispielsweise auf 160 7-Bit ASCII-Textzeichen begrenzt ist, so kann die erste datenspezifische Kennung 45 auch entfallen. Es kann vorgesehen sein, daß in jedem Datenfeld 15, 20, 25, 30 nur Daten eines einzigen Datenformats abgelegt sind. Es kann aber auch vorgesehen sein, daß zumindest in einem der Datenfelder Daten mehrerer Datenformate abgelegt sind, insbesondere im zweiten Datenfeld 20 und/oder gegebenenfalls in einem oder mehreren weiteren Datenfeldern 25, 30. Es kann natürlich auch vorgesehen sein, daß die Kurznachricht 5 mehr als die vier in Figur 2 dargestellten Datenfelder umfaßt.

Es kann auch vorgesehen sein, daß die Mitteilung des Netzbetreibers 70 über Aufbau und/oder Inhalt der Kurznachricht 5 an den ersten Teilnehmer 60 nach dessen Aufforderung vom Netzbetreiber 70 durch Auswertung der datenfeldspezifischen Kennungen 45, 50, 55, 75 erstellt und anschließend an den ersten Teilnehmer 60 gesendet wird, so daß in diesem Fall die erste Kennung 35 und die zweite Kennung 40 nicht erforderlich sind und auch das erste Datenfeld 15 nicht an den ersten Teilnehmer 60 versendet werden muß. Die auf diese Weise erzeugte Mitteilung über Aufbau und/oder Inhalt der Kurznachricht 5 kann jedoch ebenfalls in einem von allen Teilnehmern des Telekommunikationsnetzes 10 lesbaren Datenformat an den ersten Teilnehmer 60 versendet werden, wozu insbesondere wieder das GSM-SMS-Textformat unter Verwendung eines Datenfeldes mit beispielsweise 160 7-Bit ASCII-Textzeichen vorgesehen sein kann.

Anhand von Figur 3 wird nun ein konkretes Beispiel eines Übertragungsrahmens 1 für eine Kurznachricht 5 beschrieben. Die Kurznachricht 5 ist dabei als Multimedia-Kurznachricht ausgebildet. Gleiche Bezugszeichen in Figur 3 kennzeichnen gleiche Elemente wie in Figur 2. Dabei sind gemäß Figur 3 im Übertragungsrahmen 1 das erste Datenfeld 15, das zweite Datenfeld 20 und das dritte Datenfeld 25 vorgesehen. Datenfeldspezifische Kennungen in den einzelnen Datenfeldern 15, 20, 25 sind nicht vorgesehen. Das erste Datenfeld 15 umfaßt dabei Textdaten im ASCII-Textformat, das zweite Datenfeld 20 umfaßt Audiodaten beispielsweise gemäß dem WAV-Format (Wave) und das dritte Datenfeld 25 umfaßt Bilddaten, beispielsweise gemäß dem GIF-Format (Graphic Interchange Format). Das erste Datenfeld 15 mit den Textdaten ist entsprechend dem GSM-SMS-Kurznachrichtendienst textformatiert. Durch eine gestrichelte Linie zwischen der ersten Kennung 35 und der zweiten Kennung 40 ist in Figur 3 angedeutet, daß die erste Kennung 35 und die zweite Kennung 40 zu einer gemeinsamen Kennung zusammengefaßt sein können. Eine solche gemeinsame Kennung 35, 40 gibt die Zahl der Datenfelder 15, 20, 25 und den Inhalt sowie die Größe des zweiten Datenfeldes 20 und des dritten Datenfeldes 25 an. So könnte die gemeinsame Kennung 35, 40 folgendermaßen aussehen:
"Multipart/2/Audio/7654/Image/12345"

Diese gemeinsame Kennung 35, 40 sagt aus, daß es sich um eine Kurznachricht aus mehreren Datenfeldern gemäß dem Stichwort "Multipart" handelt. Die Ziffer "2" gibt an, daß neben dem immer vorhandenen ersten Datenfeld 15 mit den Textdaten und der Länge von 160 7-Bit ASCII-Textzeichen zwei weitere Datenfelder 20, 25 im Übertragungsrahmen 1 der Kurznachricht 5 vorliegen. Als erste Datenart in der gemeinsamen Kennung 35, 40 ist dabei "Audio" genannt, so daß aus der gemeinsamen Kennung 35, 40 hervorgeht, daß es sich bei den im zweiten Datenfeld 20 abgelegten Daten um Audiodaten handelt. Als zweites wird die Datenart "Image"in der gemeinsamen Kennung 35, 40 genannt, so daß aus der gemeinsamen Kennung 35, 40 hervorgeht, daß es sich bei den im dritten Datenfeld 25 abgelegten Daten um Bilddaten handelt. Anschließend an die Datenart ist in der gemeinsamen Kennung 35, 40 jeweils die Größe des zugehörigen Datenfeldes 20, 25 angegeben, so daß aus der gemeinsamen Kennung 35, 40 eine Länge einer im zweiten Datenfeld 20 übertragenen Audiodatei mit den Audiodaten von 7654 byte und einer im dritten Datenfeld 25 übertragenen Bilddatei mit den Bilddaten von 12345 byte hervorgeht. Für das erste Datenfeld 15 sind in der gemeinsamen Kennung 35, 40 keine Angaben erforderlich, da es sich hierbei in dem beschriebenen Beispiel immer um Textdaten handelt, die zum GSM-SMS-Textformat kompatibel und in ihrer Anzahl auf 160 7-Bit ASCII-Textzeichen beschränkt sind. Es kann zusätzlich vorgesehen sein, daß die gemeinsame Kennung 35, 40 auch das Datenformat für die Daten im zweiten Datenfeld 20 und im dritten Datenfeld 25 angibt. Für die Audiodaten im zweiten Datenfeld 20 könnte dann in der gemeinsamen Kennung 35, 40 als Datenformat das WAV-Format angegeben werden. Für die Bilddaten im dritten Datenfeld 25 könnte in der gemeinsamen Kennung 35, 40 als Datenformat das GIF-Format angegeben werden. Möglich ist aber auch, daß die Angaben "Audio" und "Image" der oben angegebenen gemeinsamen Kennung 35, 40 zugleich den Inhalt und auch das Format der in den entsprechenden Datenfeldern 20, 25 abgelegten Daten beschreiben, wobei dann beispielsweise vorausgesetzt ist, daß Audiodaten immer in einem vorgegebenen Format, beispielsweise dem WAV-Format und Bilddaten ebenfalls immer in einem vorgegebenen Format, beispielsweise dem GIF-Format im entsprechenden Datenfeld des Übertragungsrahmens 1 vorliegen.

Wie beschrieben ist es auch möglich, die Datenart und/oder das Datenformat über allen Teilnehmern des Telekommunikationsnetzes 10 bekannte Tabellen zu kodieren, beispielsweise mittels eines Binärkodes. In einer ersten Tabelle für Datenarten kann beispielsweise die Datenart "Textdaten" der Ziffer "1", die Datenart "Audiodaten" der Ziffer "2", die Datenart "Bilddaten" der Ziffer "3" und die Datenart videodaten" der Ziffer "4" zugeordnet sein, wobei die Ziffern entsprechend binärkodiert sein können. In einer zweiten Tabelle für Datenformate der Datenart "Audiodaten" kann beispielsweise das Datenformat "WAV" der Ziffer "1", das Datenformat "G.723" der Ziffer "2", das Datenformat "G.728" der Ziffer "3", das Datenformat "MPEG-Audio" (Motion Picture Expert Group) der Ziffer "4" und das Datenformat "AMR" (Adaptive Multi Rate) der Ziffer "5" zugeordnet sein, wobei diese Ziffern wiederum entsprechend binärkodiert sein können. In einer dritten Tabelle für Datenformate der Datenart "Bilddaten" kann beispielsweise das Datenformat "GIF" der Ziffer "1", das Datenformat "JPEG" (Joint Picture Expert Group) der Ziffer "2" und das Datenformat "BMP" (Bitmap) der Ziffer "3" zugeordnet sein, wobei diese Ziffern wiederum entsprechend binärkodiert sein können.

Die gemeinsame Kennung 35, 40 könnte dann wie folgt aussehen:
2/2/1/3/1

Diese gemeinsame Kennung 35, 40 sagt dasselbe aus, wie die oben im Textformat beschriebene. Dabei steht die erste Ziffer "2" der gemeinsamen Kennung 35, 40 für die Anzahl der zusätzlich zum ersten Datenfeld 15 vorhandenen Datenfelder im Übertragungsrahmen 1 der Kurznachricht 5. Die zweite Ziffer "2" der gemeinsamen Kennung 35, 40 verweist innerhalb der ersten Tabelle für Datenarten auf die Datenart "Audiodaten" und sagt somit aus, daß im zweiten Datenfeld 20 Audiodaten abgelegt sind. Die dritte Ziffer "1" der gemeinsamen Kennung 35, 40 verweist innerhalb der zweiten Tabelle für Datenformate der Datenart "Audiodaten" auf das "WAV"-Datenformat und sagt aus, daß die im zweiten Datenfeld 20 abgelegten Daten im "WAV"-Datenformat vorliegen. Die vierte Ziffer "3" der gemeinsamen Kennung 35, 40 verweist innerhalb der ersten Tabelle für Datenarten auf die Datenart "Bilddaten" und sagt somit aus, daß im dritten Datenfeld 25 Bilddaten abgelegt sind. Die fünfte Ziffer "1" der gemeinsamen Kennung 35, 40 verweist innerhalb der dritten Tabelle für Datenformate der Datenart "Bilddaten" auf das "GIF"-Datenformat und sagt aus, daß die im dritten Datenfeld 25 abgelegten Daten im "GIF"-Datenformat vorliegen.

Aufgrund der an den ersten Teilnehmer 60 übermittelten gemeinsamen Kennung 35, 40 kann bei diesem entschieden werden, ob ein Herunterladen des zweiten Datenfeldes 20 und/oder des dritten Datenfeldes 25 vom Netzbetreiber 70 überhaupt sinnvoll oder gewollt ist. Wenn der erste Teilnehmer 60 nicht audiofähig ist, d.h. keine Verarbeitungs- oder Wiedergabemöglichkeit für Audiodaten besitzt, so ist ein Herunterladen der Audiodaten aus dem zweiten Datenfeld 20 vom Netzbetreiber 70 nicht sinnvoll. Wenn der erste Teilnehmer 60 nicht bildfähig ist, d.h. keine Verarbeitung oder Wiedergabe von Bilddaten beim ersten Teilnehmer 60 möglich ist, so ist ein Herunterladen von Bilddaten aus dem dritten Datenfeld 25 vom Netzbetreiber 70 ebenfalls nicht sinnvoll.

Zur Auswahl der vom Netzbetreiber 70 herunterzuladenden Datenfelder des Übertragungsrahmens 1 der Kurznachricht 5 kann es vorgesehen sein, die gemeinsame Kennung 35, 40 an einer Anzeigevorrichtung des ersten Teilnehmers 60 anzuzeigen.

Die Kurznachricht 5 könnte auch einen Übertragungsrahmen 1 aus genau zwei Datenfeldern 15, 20 umfassen, wobei im ersten Datenfeld 15 wie beschrieben die Textdaten mit der gemeinsamen Kennung 35, 40 vorliegen und im zweiten Datenfeld 20 mehrere Datenarten oder Medien zusammengefaßt sind. Es kann aber auch vorgesehen sein, daß N in der Kurznachricht 5 zu übertragende Datenarten oder Medien auf N bzw. N+1 Datenfelder im Übertragungsrahmen 1 der Kurznachricht 5 verteilt werden. Der erste Teilnehmer 60 kann alle Datenfelder der Kurznachricht 5 einzeln oder zusammen vom Netzbetreiber 70 herunterladen.

Beim ersten Teilnehmer 60 kann auch bereits eine Auswertung der übertragenen gemeinsamen Kennung 35, 40 erfolgen, so daß ihre Anzeige an der Anzeigevorrichtung des ersten Teilnehmers 60 bereits angibt, welche Datenfelder der Kurznachricht 5 überhaupt vom Netzbetreiber 70 heruntergeladen werden können aufgrund der Funktionalität des ersten Teilnehmers 60.

Der zweite Teilnehmer 65 erzeugt eine Kurznachricht 5 im beschriebenen Übertragungsrahmen 1. Die Erzeugung eines Übertragungsrahmens 1 beim zweiten Teilnehmer 65 kann dabei einfach durch Aneinanderfügen der einzelnen Datenfelder 15, 20, 25, 30 gegebenenfalls unter Hinzufügen von jeweils einer der datenfeldspezifischen Kennungen 45, 50, 55, 75 erfolgen. Der Netzbetreiber 70 wiederum empfängt und speichert Kurznachrichten 5 im beschriebenen Übertragungsrahmen 1. Bei entsprechender Funktionalität des ersten Teilnehmers 60 kann es vorgesehen sein, den Übertragungsrahmen 1 vollständig vom Netzbetreiber 70 herunterzuladen und zum ersten Teilnehmer 60 zu übertragen. In diesem Fall empfängt der erste Teilnehmer 60 die Kurznachricht 5 im beschriebenen Übertragungsrahmen 1, speichert sie gegebenenfalls ab und/oder gibt sie optisch und/oder akustisch wieder. Der erste Teilnehmer 60 empfängt zumindest ein einzelnes Datenfeld des Übertragungsrahmens 1, speichert es gegebenenfalls ab und/oder gibt es optisch und/oder akustisch wieder. Eine Auswertung empfangener Datenfelder 15, 20, 25, 30 beim Netzbetreiber 70 und beim ersten Teilnehmer 60 kann beispielsweise aufgrund der datenfeldspezifischen Kennungen 45, 50, 55, 75 erfolgen, falls diese mit den zugehörigen Datenfeldern 15, 20, 25, 30 übertragen werden oder aufgrund der gegebenenfalls übertragenen ersten Kennung 35 und/oder zweiten Kennung 40.

Der erfindungsgemäße Übertragungsrahmen 1 ist nicht auf die Verwendung in einem Funktelekommunikationsnetz beschränkt, sondern kann auch in einem drahtgebundenen Telekommunikationsnetz 10 zur Anwendung kommen, wobei dann auch die Teilnehmer 60, 65 und der Netzbetreiber 70 drahtgebunden sind. Es kann auch vorgesehen sein, daß einer der beiden Teilnehmer 60, 65 über ein drahtgebundenes Telekommunikationsnetz 10 und der andere der beiden Teilnehmer 60, 65 über ein drahtloses Telekommunikationsnetz 10 mit dem Netzbetreiber 70 in Verbindung steht, so daß der Übertragungsrahmen 1 sowohl für die Übertragung von Kurznachrichten 5 in dem drahtgebundenen als auch in dem drahtlosen Telekommunikationsnetz 10 geeignet ist.

Die Erfindung umfasst auch einen Übertragungsrahmen (1) für die Übertragung von Kurznachrichten (5) in einem Telekommunikationsnetz (10), insbesondere in einem Funktelekommunikationsnetz, wobei mindestens zwei Datenfelder (15, 20, 25, 30) vorgesehen sind, wobei in den Datenfeldern (15, 20, 25, 30) Daten einer Kurznachricht (5) abgelegt sind und wobei in einem ersten Datenfeld (15) Daten eines ersten Datenformats und in einem zweiten Datenfeld (20) Daten eines vom ersten Datenformat verschiedenen zweiten Datenformats abgelegt sind.

Hierbei kann in dem ersten Datenfeld (15) eine erste Kennung (35) vorgesehen sein, die den Aufbau der Kurznachricht (5) kennzeichnet.

Hierbei kann die erste Kennung (35) Angaben über die Anzahl der Datenfelder (15, 20, 25, 30) und/oder über die Datenformate in den Datenfeldern (15, 20, 25, 30) und/oder über die Größe der Datenfelder (15, 20, 25, 30) umfassen.

Hierbei kann in dem ersten Datenfeld (15) eine zweite Kennung (40) vorgesehen sein, die den Inhalt der Kurznachricht (5) kennzeichnet.

Hierbei kann die zweite Kennung (40) Angaben über die Datenart, wie insbesondere Audio- oder Bilddaten, der in den Datenfeldern (15, 20, 25, 30) abgelegten Daten umfassen.

Hierbei kann nur das erste Datenfeld (15) in seiner Größe auf einen vorgegebenen Wert beschränkt sein.

Hierbei kann in mindestens zwei Datenfeldern (15, 20, 25, 30) jeweils eine datenfeldspezifische Kennung (45, 50, 55, 75) vorgesehen sein, die den Aufbau und/oder den Inhalt des entsprechenden Datenfeldes (15, 20, 25, 30) kennzeichnet. Hierbei können die im ersten Datenfeld (15) abgelegten Daten in einem von allen Teilnehmern des Telekommunikationsnetzes (10) lesbaren Datenformat vorliegen.

Hierbei können die im ersten Datenfeld (15) abgelegten Daten in einem Textformat, insbesondere gemäß dem GSM-SMS-Format (Global System for Mobile Communications - Short Message Service), vorliegen.

Hierbei können in einem der Datenfelder (15, 20, 25, 30) Daten mehrerer Datenformate abgelegt sein.

Hierbei können in jedem Datenfeld (15, 20, 25, 30) nur Daten eines einzigen Datenformats abgelegt sein.

Die Erfindung umfasst auch ein Telekommunikationsgerät (60, 65, 70), insbesondere Funkeinheit, mit einem Übertragungsrahmen (1) für die Übertragung von Kurznachrichten (5) in einem Telekommunikationsnetz (10), insbesondere in einem Funktelekommunikationsnetz, wobei in dem Übertragungsrahmen (1) mindestens zwei Datenfelder (15, 20, 25, 30) vorgesehen sind, wobei in den Datenfeldern (15, 20, 25, 30) Daten einer Kurznachricht (5) abgelegt sind und wobei in einem ersten Datenfeld (15) Daten eines ersten Datenformats und in einem zweiten Datenfeld (20) Daten eines vom ersten Datenformat verschiedenen zweiten Datenformats abgelegt sind.

## Patentansprüche

1. Verfahren zum Übertragen einer Kurznachricht (5) in einem Telekommunikationsnetz (10) zwischen einem zweiten Teilnehmer (65) und einem ersten Teilnehmer (60), wobei
eine beim zweiten Teilnehmer (65) erstellte und mit entsprechender Adressierung für den ersten Teilnehmer (60) über das Telekommunikationsnetz (10) an den Netzbetreiber (70) des Telekommunikationsnetzes (10) abgestrahlte Kurznachricht (5) bei dem Netzbetreiber (70) gespeichert wird,
der Netzbetreiber (70) eine Nachricht an den ersten Teilnehmer (60) sendet, wenn der Netzbetreiber (70) eine Aktivierung des ersten Teilnehmers (60) feststellt,
auf Aufforderung, durch den ersten Teilnehmer (60) nach Empfang der Nachricht, zur Übertragung der Kurznachricht (5) der Netzbetreiber (70) zunächst eine Mitteilung an den ersten Teilnehmer (60) sendet, die den ersten Teilnehmer (60) über Aufbau und/oder Inhalt der Kurznachricht (5) informiert,
und dann die Kurznachricht (5) durch den ersten Teilnehmer (60) teilweise oder vollständig vom Netzbetreiber (70) heruntergeladen werden kann.

2. Verfahren gemäß Anspruch 1, wobei der Netzbetreiber (70) die Kurznachrichten (5) in einem Übertragungsrahmen (1) empfängt und speichert.

3. Verfahren gemäß Anspruch 2, wobei
im Übertragungsrahmen (1) mindestens zwei Datenfelder (15, 20, 25, 30) vorgesehen sind,
in den Datenfeldern (15, 20, 25, 30) Daten der Kurznachricht (5) abgelegt sind und
in einem ersten Datenfeld (15) Daten eines ersten Datenformats und in einem zweiten Datenfeld (20) Daten eines vom ersten Datenformat verschiedenen zweiten Datenformats sind, wobei
in dem ersten Datenfeld (15) eine erste Kennung (35), die den Aufbau der Kurznachricht (5) kennzeichnet, vorgesehen ist und im ersten Datenfeld (15) eine zweite Kennung (40) vorgesehen ist, die den Inhalt der Kurznachricht (5) kennzeichnet.

4. Verfahren gemäß Anspruch 3, wobei in mindestens zwei Datenfeldern (15, 20, 25, 30) jeweils eine datenfeldspezifische Kennung (45, 50, 55, 75) vorgesehen ist, die den Inhalt und/oder den Aufbau des entsprechenden Datenfeldes (15, 20, 25, 30) kennzeichnet.

5. Verfahren gemäß einem Ansprüche 3 oder 4, wobei der Netzbetreiber (70) auf Anforderung des ersten Teilnehmers (60) das erste Datenfeld (15) mit der ersten Kennung (35) und der zweiten Kennung (40) an den ersten Teilnehmer (60) übermittelt.

6. Verfahren gemäß einem der vorherigen Ansprüche, wobei die Mitteilung des Netzbetreibers (70) über Aufbau und/oder Inhalt der Kurznachricht (5) an den ersten Teilnehmer (60) nach dessen Aufforderung vom Netzbetreiber (70) durch Auswertung der datenfeldspezifischen Kennungen (45, 50, 55, 75) erstellt und anschließend an den ersten Teilnehmer (60) gesendet wird.

7. Verfahren gemäß Anspruch 6, wobei das erste Datenfeld (15) nicht an den ersten Teilnehmer (60) versendet wird.

8. Verfahren gemäß einem der vorherigen Ansprüche, wobei die Mitteilung über Aufbau und/oder Inhalt der Kurznachricht (5) in einem von allen Teilnehmern des Telekommunikationsnetzes (10) lesbaren Datenformat an den ersten Teilnehmer (60) versendet wird, insbesondere in dem GSM-SMS-Textformat unter Verwendung eines Datenfeldes mit beispielsweise 160 7-Bit ASCII-Textzeichen.

9. Verfahren gemäß einem der Ansprüche 4 bis 8, wobei eine Auswertung empfangener Datenfelder (15, 20, 25, 30) beim Netzbetreiber (70) aufgrund der datenfeldspezifischen Kennungen (45, 50, 55, 75) erfolgt, falls diese mit den zugehörigen Datenfeldern (15, 20, 25, 30) übertragen werden, oder aufgrund der übertragenen ersten Kennung (35) und/oder zweiten Kennung (40).

## Claims

1. Method for transmitting a short message (5) in a telecommunication network (10) between a second subscriber (65) and a first subscriber (60), wherein
a short message (5) that is written on the second subscriber (65) and emitted with appropriate addressing for the first subscriber (60) to the network operator (70) of the telecommunication network (10) via the telecommunication network (10) is stored by the network operator (70),
the network operator (70) sends a message to the first subscriber (60) when the network operator (70) detects activation of the first subscriber (60),
on a request, by the first subscriber (60) following reception of the message, to transmit the short message (5), the network operator (70) first of all sends a communication to the first subscriber (60) that informs the first subscriber (60) about the structure and/or content of the short message (5),
and then the short message (5) can be downloaded in part or in full from the network operator (70) by the first subscriber (60).

2. Method according to Claim 1, wherein the network operator (70) receives and stores the short messages (5) in a transmission frame (1).

3. Method according to Claim 2, wherein
the transmission frame (1) has at least two data fields (15, 20, 25, 30) provided in it,
the data fields (15, 20, 25, 30) store data from the short message (5), and
a first data field (15) contains data in a first data format and a second data field (20) contains data in a second data format, which is different from the first data format, wherein
the first data field (15) has a first identifier (35) provided in it that denotes the structure of the short message (5), and the first data field (15) has a second identifier (40) provided in it that denotes the content of the short message (5).

4. Method according to Claim 3, wherein at least two data fields (15, 20, 25, 30) each have a data-field-specific identifier (45, 50, 55, 75) provided in them that denotes the content and/or the structure of the relevant data field (15, 20, 25, 30).

5. Method according to either of Claims 3 and 4, wherein the network operator (70) transmits the first data field (15) having the first identifier (35) and the second identifier (40) to the first subscriber (60) at the request of the first subscriber (60).

6. Method according to one of the preceding claims, wherein the communication from the network operator (70) about the structure and/or content of the short message (5) to the first subscriber (60) is produced, following the request from the latter, by the network operator (70) by evaluating the data-field-specific identifiers (45, 50, 55, 75) and is subsequently sent to the first subscriber (60).

7. Method according to Claim 6, wherein the first data field (15) is not sent to the first subscriber (60).

8. Method according to one of the preceding claims, wherein the communication about the structure and/or content of the short message (5) is sent to the first subscriber (60) in a data format that is readable by all subscribers of the telecommunication network (10), particularly in the GSM-SMS text format using a data field having 160 7-bit ASCII text characters, for example.

9. Method according to one of Claims 4 to 8, wherein received data fields (15, 20, 25, 30) are evaluated by the network operator (70) on the basis of the data-field-specific identifiers (45, 50, 55, 75) if said identifiers are transmitted with the associated data fields (15, 20, 25, 30), or the basis of the transmitted first identifier (35) and/or second identifier (40).

## Revendications

1. Procédé de transmission d'un message court (5) dans un réseau de télécommunication (10) entre un deuxième abonné (65) et un premier abonné (60), dans lequel
un message court (5) créé par le deuxième abonné (65) et émis vers l'opérateur de réseau (70) du réseau de télécommunication (10) avec un adressage correspondant à destination du premier abonné (60) par l'intermédiaire du réseau de télécommunication (10) est stocké par l'opérateur de réseau (70),
l'opérateur de réseau (70) envoie un message au premier abonné (60) lorsque l'opérateur de réseau (70) détecte une activation du premier abonné (60),
pour transmettre le message court (5), l'opérateur de réseau (70) envoie tout d'abord au premier abonné (60) sur demande, par l'intermédiaire du premier abonné (60), après réception du message, une communication qui informe le premier abonné (60) de la structure et/ou du contenu du message court (5),
et le message court (5) peut ensuite être partiellement ou entièrement téléchargé par l'opérateur de réseau (70) par l'intermédiaire du premier abonné (60).

2. Procédé selon la revendication 1, dans lequel l'opérateur de réseau (70) reçoit et stocke les messages courts (5) dans une trame de transmission (1).

3. Procédé selon la revendication 2, dans lequel il est prévu dans les trames de transmission (1) au moins deux champs de données (15, 20, 25, 30),
des données du message court (5) sont stockées dans les champs de données (15, 20, 25, 30), et
les données contenues dans un premier champ de données (15) présentent un premier format de données et les données contenues dans un deuxième champ de données (20) présentent un deuxième format de données différent du premier format de données, dans lequel il est prévu dans le premier champ de données (15) une première identification (35) qui caractérise la structure du message court (5) et il est prévu dans le premier champ de données (15) une deuxième identification (40) qui caractérise le contenu du message court (5).

4. Procédé selon la revendication 3, dans lequel il est respectivement prévu dans au moins deux champs de données (15, 20, 25, 30), une identification (45, 50, 55, 75) spécifique du champ de données qui caractérise le contenu et/ou la structure du champ de données (15, 20, 25, 30) correspondant.

5. Procédé selon la revendication 3 ou 4, dans lequel l'opérateur de réseau (70), à la demande du premier abonné (60), transmet au premier abonné (60) le premier champ de données (15) avec la première identification (35) et la deuxième identification (40).

6. Procédé selon l'une quelconque des revendications précédentes, dans lequel la communication de l'opérateur de réseau (70) concernant la structure et/ou le contenu du message court (5) destinée au premier abonné (60) est créée par l'opérateur de réseau (70), après que le premier abonné a envoyé sa demande, lequel opérateur évalue les identifications (45, 50, 55, 75) spécifiques du champ de données puis est envoyée au premier abonné (60).

7. Procédé selon la revendication 6, dans lequel le premier champ de données (15) n'est pas envoyé au premier abonné (60).

8. Procédé selon l'une quelconque des revendications précédentes, dans lequel la communication concernant la structure et/ou le contenu du message court (5) est envoyée au premier abonné (60) dans un format de données lisible par tous les abonnés du réseau de télécommunication (10), notamment dans un format de texte GSM-SMS en utilisant un champ de données comportant par exemple 160 symboles de texte ASCII à 7 bits.

9. Procédé selon l'une quelconque des revendications 4 à 8, dans lequel une évaluation de champs de données (15, 20, 25, 30) reçus est effectuée par l'opérateur de réseau (70) sur la base des identifications (45, 50, 55, 75) spécifiques du champ de données dans le cas où ceux-ci sont transmis avec les champs de données (15, 20, 25, 30) associés ou sur la base de la première identification (35) et/ou de la deuxième identification (40) transmise.
